# EUROPEAN PATENT SPECIFICATION

(11) **EP 4 481 429 B1**
(45) Date of publication and mention of the grant of the patent: **12.08.2026**
(21) Application number: 23180160.6
(22) Date of filing: 19.06.2023
(51) Int. Cl.: G01S 7/35, G06F 7/26, G01S 7/292, G01S 13/524

(54) **APPARATUS AND METHOD FOR OS-CFAR DETECTION, AND RADAR SYSTEM**
VORRICHTUNG UND VERFAHREN ZUR OS-CFAR-DETEKTION UND RADARSYSTEM
APPAREIL ET PROCÉDÉ DE DÉTECTION OS-CFAR, ET SYSTÈME RADAR

(43) Date of publication of application: 25.12.2024
(73) Proprietor: Infineon Technologies AG, 85579 Neubiberg (DE)
(72) Inventor: HOSTALKA, Henrik, 01129 Dresden (DE)
(74) Representative: 2SPL Patentanwälte PartG mbB

(56) References cited:
- US-A- 5 179 712
- US-A1- 2014 126 309

## Description

### Field

The present disclosure relates to sorting for OS-CFAR (order(ed) statistic(s) constant false alarm rate). Examples relate to an apparatus for OS-CFAR detection, a radar system and a method for OS-CFAR detection.

### Background

US 5 179 712 A proposes a rank cell array for ranking a series of sample values including a number of identical rank cells (RC1, RC2. . . ) permitting ready modification of the sorting window size in an OS CFAR radar application, for example. Each rank cell (RC1, RC2. . . ) includes a multiplexer (49), a D flip-flop (41), first and second comparators (43, 45), and a multiplexer controller (49). Each clock interval, the foregoing circuitry examines the sample value entering the sorting window, the sample value leaving the sorting window, the sample value in the preceding rank cell, and the sample value in the succeeding rank cell to determine the sample value in the rank cell during the next clock interval.

US 2014/126309 A1 proposes a shiftable memory in a system and a method to shift a contiguous subset of stored data within the shiftable memory. The shiftable memory includes a memory having built-in shifting capability to shift a contiguous sub set of data stored by the memory from a first location to a second location within the memory. The contiguous subset has a size that is smaller than a total size of the memory. The system further includes a processor to provide an address and the length of the contiguous subset. The method includes selecting the contiguous subset of data and shifting the selected contiguous subset.

Conventionally, sorting algorithms for OS-CFAR techniques require memory and computationally intense processing. This memory and computational requirement poses challenges especially in real-time or resource-constrained scenarios. Hence, there is a demand for improved sorting for OS-CFAR detection.

### Summary

This demand is satisfied by the independent claims. Further beneficial embodiments are given by the dependent claims.

The invention relates to an apparatus for OS-CFAR detection, comprising storage circuitry comprising a plurality of storage segments, wherein the storage circuitry is configured to store address data indicating addresses of data elements of radar data at a further storage circuitry, and control circuitry configured to perform a sorting algorithm for OS-CFAR detection using the steps of comparing a new data element of the radar data to at least one data element indicated by address data stored in the storage circuitry, determining a storage segment of the plurality of storage segments at which address data of the new data element is to be stored based on the comparison, and controlling the storage circuitry to shift address data stored at the determined storage segment to another storage segment.

Some aspects of the present disclosure relate to a radar system, comprising an apparatus as described herein, and a radar sensor configured to generate the radar data.

The invention further relates to a method for OS-CFAR detection, comprising storing, at storage circuitry comprising a plurality of storage segments, address data indicating addresses of data elements of radar data at a further storage circuitry, and performing, by control circuitry, a sorting algorithm for OS-CFAR detection using the steps of comparing a new data element of the radar data to at least one data element indicated by address data stored in the storage circuitry, determining a storage segment of the plurality of storage segments at which address data of the new data element is to be stored based on the comparison, and controlling the storage circuitry to shift address data stored at the determined storage segment to another storage segment.

### Brief description of the Figures

Some examples of apparatuses and/or methods will be described in the following by way of example only, and with reference to the accompanying figures, in which
Fig. 1 illustrates an example of an apparatus for OS-CFAR detection;
Figs. 2a to 2d illustrate an example of a sorting algorithm for OS-CFAR detection;
Fig. 3 illustrates an example of a removal of address data from storage circuitry;
Figs. 4a and 4b illustrate examples of a shift register;
Fig. 5 illustrates an example of OS-CFAR detection;
Fig. 6 illustrates an example of a radar system; and
Fig. 7 illustrates an example of a method for OS-CFAR detection.

### Detailed Description

Some examples are now described in more detail with reference to the enclosed figures. However, other possible examples are not limited to the features of these embodiments described in detail. Other examples may include modifications of the features as well as equivalents and alternatives to the features, insofar as they are supported by the appended claims. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

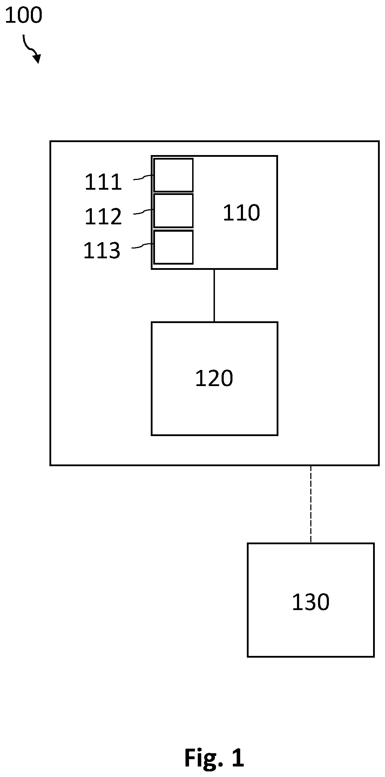

Fig. 1 illustrates an example of an apparatus 100 for OS-CFAR detection. OS-CFAR detection is a technique for adaptive thresholding used in signal processing of radar data for detecting or tracking targets, e.g., in the presence of clutter or noise.

The apparatus 100 comprises storage circuitry 110 and control circuitry 120. The control circuitry 120 is coupled to the storage circuitry 110 in order to control the storage circuitry as described further below.

The apparatus 100 may be partially or fully integrated into a radar sensor. Alternatively, the apparatus 100 may be external to the radar sensor. (Raw) radar data acquired by the radar sensor or radar data derived thereof (e.g., by pre-processing of the raw radar data) is stored, e.g., via a direct-memory access, in a further storage circuitry 130. The further storage circuitry 130 may be external to the storage circuitry 110 and optionally external to the apparatus 100. The radar data may, e.g., indicate an IF (intermediate frequency) signal of the radar sensor or a pre-processed version thereof (e.g., a noise-reduced, DC-removed (direct current) version thereof). The radar sensor may acquire the radar data by mixing a reflection of a transmitted signal with a local oscillator signal at a specific frequency.

The apparatus 100 is coupled to the further storage circuitry 130 such that it has at least partially access, e.g., read and optionally write access, to the further storage circuitry 130. The apparatus 100 may therefore be able to obtain at least partially the radar data stored therein. The apparatus 100 may obtain the data, e.g., via interface circuitry or directly, in case the apparatus 100 comprises the further storage circuitry 130.

The storage circuitry 110 may be any device for storing data, e.g., a random-access memory, a cache or alike. In some examples, the storage circuitry 110 may comprise or may be a parallel shift register, as explained further below. The storage circuitry 110 may further be implemented as a buffer storage, i.e., it may temporarily store (address) data while a sorting algorithm for OS-CFAR detection is performed by the control circuitry 120. As an OS-CFAR algorithm may require a subset of the radar data to be sorted or re-ordered, the use of a buffer storage may ensure that the original radar data stored at the further storage circuitry 130 may stay unchanged, i.e., in its original order. Further, the buffer implementation of the storage circuitry 110 may offload an external processing circuitry for further processing of the radar data.

The storage circuitry 110 comprises a plurality of storage (or memory) segments 111 to 113. In Fig. 1, there are shown three storage segments 111 to 113 for illustrative purposes only. In other examples, the storage circuitry 110 may comprise any number of storage segments, e.g., any number n ≥ 2 of storage segments. Further, the blocks indicating storage segments 111 to 113 shown in Fig. 1 shall be understood as an abstract representation of the storage segments 111 to 113: the form, size or arrangement of the storage segments 111 to 113 shown in Fig. 1 are meant for illustrative purposes. For instance, the storage circuitry 110 may exhibit a linear, array or three-dimensional arrangement of storage segments.

The storage segments 111 to 113 may comprise (or be) at least one respective memory cell or physical bit. The storage segments 111 to 113 may refer to a distinct structure, size or portion of memory aligned to the specific type or size of data to be stored therein. The storage segments 111 to 113 may indicate an order of data stored therein, e.g., such that the storage segment 111 stores a first part of data, storage segment 112 stores a second part of the data subsequent to the first part, and storage segment 113 stores a third part of the data subsequent to the second part.

The storage circuitry 110 is configured to store (at the storage segments 111 to 113) address data indicating addresses of data elements of the radar data at the further storage circuitry 130. The data elements may refer to samples of the radar data or to values (e.g., ranges) derived from the radar data. For instance, the data elements may be a subset of (e.g., modified) samples of the radar data, e.g., selected within one chirp of the radar data. The data elements may be selected depending on the OS-CFAR algorithm. For example, the data elements may be selected by windowing, as explained further below.

The address data may indicate the addresses such that the address data may be mappable, e.g., based on a specific scheme, to the addresses of the data elements. The address data may, e.g., indicate unique identifiers (or indices, pointers or alike) assigned to respective storage locations in the further storage circuitry. The address data may, for instance, indicate logical addresses which are translatable to physical addresses of the further storage circuitry 130. In some examples, the address data may indicate relative addresses of the data elements, i.e., the address data may indicate a location at the further storage circuity relative to a predetermined location, e.g., relative to a (starting) address of a specific data element within a dataset (or window) to be sorted. For example, the address data may be determined by numbering or indexing these data elements. The numbers or indexes assigned to the data elements may correspond to their order in a data sequence of the radar data. This may limit the length of the address data to the number of data elements being stored for OS-CFAR processing.

Performing a sorting algorithm, such as ranking the values (data elements) in order of magnitude, may in many applications be the most compute and memory intense part of OS-CFAR. Conventional OS-CFAR buffers may require as much memory as the original radar data. This means that conventionally the minimum size of the memory may be equal to the size of the data elements themselves. By contrast, the storage circuitry 110 may require a smaller minimum size since it does not have to store the data elements themselves but rather indices (e.g., as integers) representing the data location (addresses), e.g., within one window of the radar data. Thus, the apparatus 100 may enable a reduction of memory size or storage capacity requirements. In a specific application, the data elements have each a size of 24 bit, while their pointers have each a size of 4 bit only. The apparatus 100 may thus enable an indexed sort which may require only minimal logic added in the addressing path. The apparatus 100 may further enable a reduced memory area which leads to decreased resource and power consumption.

The control circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The control circuitry 120 may optionally be coupled to, e.g., read only memory (ROM) for storing software, random access memory (RAM) and/or non-volatile memory.

The control circuitry 120 is configured to perform a sorting algorithm for OS-CFAR detection. The sorting algorithm may aim at bringing the address data into a specific order for OS-CFAR detection. The choice of a sorting algorithm may depend on the target application, e.g., on the size or characteristics of the address data, on the number of ordered statistics required, the performance requirements of the OS-CFAR detection or alike. The control circuitry 120 may perform any sorting algorithm, e.g., at least one of a merge sort, a quick sort, a heap sort, a selection sort, etc. In some examples, the control circuitry 120 is configured to perform an insertion sort for OS-CFAR detection. Insertion Sort may be a comparison-based sorting algorithm that may iteratively build the final sorted address data one element at a time. Insertion sort may increase the sorting efficiency, especially for small-size data such as the address data used herein.

The performance of the sorting algorithm may, in some examples, require pre-processing of the data elements. The pre-processing may be performed by processing circuitry external to the control circuitry 120 or by the control circuitry 120 itself. In the latter case, the control circuitry 120 may be configured to determine the data elements, e.g., such that they exhibit a data format required for OS-CFAR detection. For example, the control circuitry 120 may determine a range representation of the radar data indicating ranges of potential targets within the field of view of the radar sensor. The control circuitry 120 may perform a Fourier transform (e.g., a fast Fourier transform) on the radar data, e.g., along fast time, in order to yield the range representation. The data elements may be selected from the said range representation.

The radar data may, in some examples, be originally provided in cartesian format with a real and imaginary part. In such cases, the control circuitry 120 may be further configured to determine the data elements through converting the radar data into a polar representation having a magnitude and an angle. The data may be converted into a polar format by, e.g., applying a Pythagorean addition on the real and the imaginary part. The data elements may be selected such that they are or indicate magnitudes of the polar representation of the radar data.

These magnitudes may be represented as integer values which may, in a specific example, have a length of 24 bits. In cartesian format, one data instance of the radar data may have a length of 48 bits. However, the storage circuitry 110 may store a relative index of these data instances or values, and not the magnitudes or the real and imaginary parts themselves.

Depending on the maximum size N of a subset (an array) of the radar data to be sorted, the length of the indices may be W according to Equation 1: $W = ceil \left({log}_{2} N\right)$

With an integer width Wᵢₙₜ of 24 bits for a magnitude value, the number of required bits B is reduced according to Equation 2: $B = ceil \left({log}_{2} N\right) / {W}_{int} = ceil \left({log}_{2} 16\right) / 24 \approx 17 %$

In cases where the control circuitry 120 performs pre-processing on the radar data, the apparatus 100 may have additional advantages: since for the pre-processing, e.g., for the conversion from a cartesian format (IQ format or real and imaginary part) to a polar format (magnitude and angle), an access to the original memory (further storage circuitry 130) is needed anyway, the control circuitry 120 may use this access to perform the sorting algorithm, as described in the following.

The control circuitry 120 is configured to perform the sorting algorithm using the steps of comparing a new data element of the radar data to at least one (e.g., different) data element indicated by address data stored in the storage circuitry 110, determining a storage segment of the plurality of storage segments 111 to 113 at which address data of the new data element is to be stored based on the comparison, and controlling the storage circuitry 110 to shift address data stored at the determined storage segment to another storage segment. That is, the comparison is performed on the data elements while the sorting is performed on their address data.

For example, there may be a plurality of data elements, e.g., of a window of the radar data, whose addresses are to be stored in a sorted manner at the storage circuitry 110. For instance, the control circuitry 120 may be configured to select a window of the radar data comprising the plurality of data elements, e.g., of which some are previous and others are next to a data element under test. The control circuitry 120 may be configured to perform the sorting algorithm for the selected window. The control circuitry 120 may select the new data element from the plurality of data elements, e.g., in a predefined manner. For instance, the control circuitry 120 may go through the data elements of the plurality of the data elements one after another following a predefined order of the data elements at the further storage circuitry 130. The control circuitry 120 may then, e.g., index or number, the new data element according to its relative location at the further storage circuitry 130.

The comparison may be performed based on any predefined comparison criterion. For instance, the comparison criterion may define a mathematical relation between the new data element and already processed data elements (thus, with address data already stored at the storage circuitry 110) which has to be true for fulfilling the predefined comparison criterion. For instance, the control circuitry 120 may perform the comparison by determining whether the new data element has a (range) value which is smaller (or greater), e.g., by a predefined value, than that of a data element already processed. If so, the comparison criterion is determined to be fulfilled.

The fulfillment of the comparison criterion may indicate the location among the storage segments 111 to 113 where address data of the new data element is to be inserted. For instance, if the control circuitry 120 determines that a storage segment indicates a data element fulfilling the comparison criterion, the said storage segment or a neighboring storage segment may be determined as the location at which the new data element is to be stored.

The comparison may further be performed along the already processed data elements until the comparison criterion is fulfilled. Thus, the new data element may be compared step by step with an existing list of sorted elements. For instance, if the comparison criterion is not fulfilled with one data element, the control circuitry 120 may select another of the already processed data elements and perform the comparison again. For example, the control circuitry 120 may be configured to consecutively select storage segments in an ascending or descending order and compare respective data elements indicated by address data stored at the selected storage segment to the new data element until the comparison fulfills the predefined comparison criterion.

Shifting the address data comprises storing said address data at the other storage segment (different to the determined storage segment) and optionally deleting the address data from the determined storage segment. The other storage segment may be a predefined storage segment of the plurality of storage segments 111 to 113, e.g., predefined relative to the determined storage segment, such as a storage segment subsequent or previous to the determined storage segment. In some examples, the control circuitry 120 is further configured to control the storage circuitry 110 to shift all address data stored in storage segments subsequent or previous to the determined storage segment by a predefined number of storage segments, e.g., by one, two or more storage segments. For instance, the storage circuitry 110 may push all address data at and/or following/preceding the determined storage segment aside. For example, elements not yet compared may have their address data be moved further towards the end of the storage circuity 110.

In order to insert the new data element into the correct position, the control circuitry 120 may, in some examples, further be configured to control the storage circuitry 110 to store the address data of the new data element at the determined storage segment.

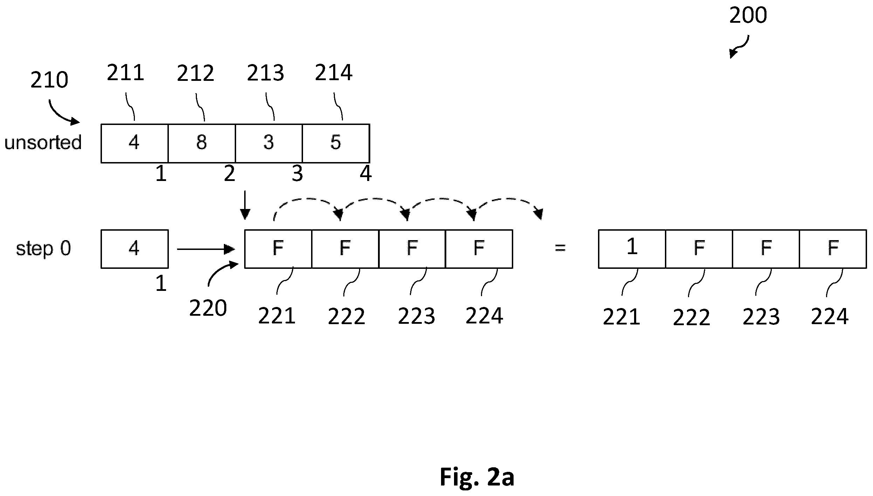

A concrete example of how the sorting algorithm may be performed is illustrated by **Figs. 2a to 2d.** Figs. 2a to 2d show a first step, a second step, a third step and a fourth step of an example of a sorting algorithm 200, respectively. In the example of Figs. 2a to 2d, the sorting algorithm 200 is an insertion sort. The sorting algorithm 200 may be performed by an apparatus for OS-CFAR detection as described herein, such as by the apparatus 100.

Control circuitry, such as control circuitry 120, may be configured to sort data elements 210 of radar data stored at a further storage circuitry 130. In Fig. 2a, the data elements 210 are shown in their original, unsorted state, comprising a first data element 211 having the value 4, a second data element 212 having the value 8, a third data element 213 having the value 3, and a fourth data element 214 having the value 5.

The data elements 210 are indexed according to their location at the further storage circuitry. The first data element 211 has the index 1, the second data element 212 has the index 2, the third data element 213 has the index 3, and the fourth data element 214 has the index 4.

In the first step (step 0) illustrated by Fig. 2a, the control circuitry 120 selects the first data element 211 as new data element and compares the new data element to at least one data element indicated by address data stored in storage circuitry 220. The storage circuitry 220 may be an example of an implementation of storage circuitry 110. The storage circuitry 220 comprises a plurality of storage segments in a specific order: a first storage segment 221, a second storage segment 222 subsequent to the first storage segment 221, a third storage segment 223 subsequent to the second storage segment 222, and a fourth storage segment 224 subsequent to the third storage segment 223. In the first step, the storage circuitry 220 is not yet filled with any address data (e.g., Figs. 2a to 2d may show an initial sorting). The control circuitry 120 therefore controls the storage circuitry 220 to store address data (the index 1) of the new data element at the first storage segment 221.

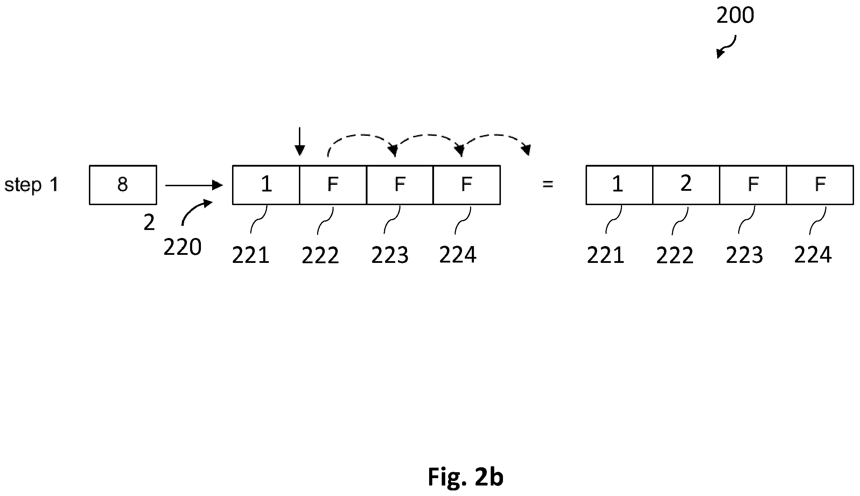

In the second step (step 1) illustrated by Fig. 2b, the control circuitry 120 selects the second data element 212 (8) as the new data element and compares the new data element to at least one data element indicated by address data stored in the storage circuitry 220. The control circuitry 120 selects the first storage segment 221 and compares the first data element 211 indicated by the address data stored at the selected first storage segment 221 to the new data element.

The control circuitry 120 then determines a storage segment of the plurality of storage segments 221 to 224 at which address data (index 2) of the new data element is to be stored based on the comparison. For example, in response to determining that the comparison fulfills a predefined comparison criterion, the control circuitry 120 may determine the desired storage segment for the address data of the new data element. The predefined comparison criterion of the example of Figs. 2a to 2d may be "the currently checked data element (the data element indicated by address data stored at the currently selected storage segment) being greater than the new data element". Since 4 (the first data element 211) is not greater than 8 (the new data element), the predefined comparison criterion is not fulfilled.

Since the following storage segments 222 to 224 are empty, the (next) second storage segment 222 is determined as the desired storage segment for address data of the new data element. The control circuitry 120 controls the storage circuitry 220 to store the address data at the determined second storage segment 222.

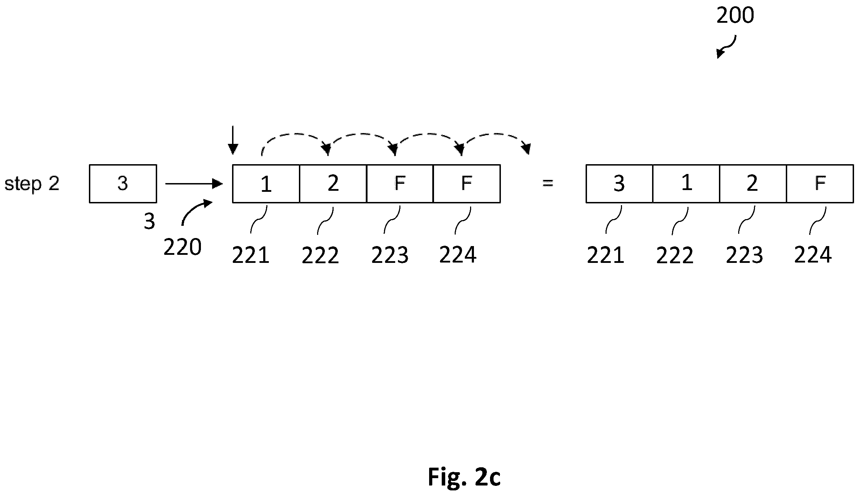

In the third step (step 2) illustrated by Fig. 2c, the control circuitry 120 selects the third data element 213 (3) as the new data element and compares the new data element to at least one data element indicated by address data stored in the storage circuitry 220. The control circuitry 120 selects the first storage segment 221 and compares the first data element 211 indicated by the address data stored at the selected first storage segment 221 to the new data element. Since 4 (the first data element 211) is greater than 3 (the new data element), the predefined comparison criterion is fulfilled.

The control circuitry 120 determines the first storage segment 221 to store address data (index 3) of the new data element since it is the storage segment where the comparison has been fulfilled. The control circuitry 120 then controls the storage circuitry 220 to shift address data stored at the determined first storage segment 221 to another storage segment, to storage segment 222. The control circuitry 120 controls the storage circuitry 220 to shift all address data stored in storage segments subsequent to the determined first storage segment 221 by one storage segment. Thus, the index 2 previously stored at the second storage segment 222 is shifted to storage segment 223. Then, the control circuitry 120 controls the storage circuitry 220 to store the address data of the new data element at the determined first storage segment 221.

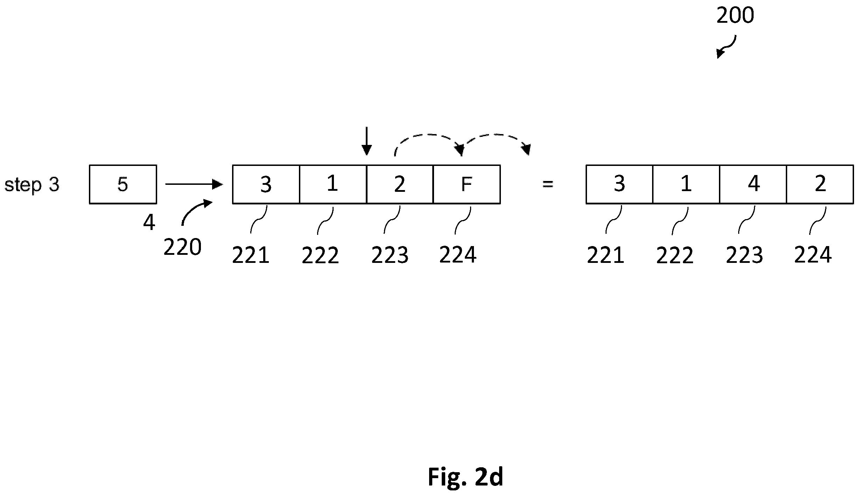

In the fourth step (step 3) illustrated by Fig. 2d, the control circuitry 120 selects the fourth data element 214 (5) as the new data element and compares the new data element to at least one data element indicated by address data stored in the storage circuitry 220. The control circuitry 120 selects the first storage segment 221 and compares the third data element 213 indicated by the address data stored at the selected first storage segment 221 to the new data element. Since 3 (the third data element 213) is not greater than 5 (the new data element), the predefined comparison criterion is not fulfilled.

The control circuitry 120 consecutively selects the storage segments 221 to 224 in an ascending order and compares respective data elements indicated by address data stored at the selected storage segment to the new data element until the comparison fulfills the predefined comparison criterion. Then, the control circuitry selects the second storage segment 222 and compares the first data element 211 indicated by the address data stored at the selected second storage segment 222 to the new data element. Since 4 (the first data element 211) is not greater than 5 (the new data element), the predefined comparison criterion is not fulfilled. Then, the control circuitry selects the third storage segment 223 and compares the second data element 212 indicated by the address data stored at the selected third storage segment 223 to the new data element. Since 8 (the second data element 212) is greater than 5 (the new data element), the predefined comparison criterion is fulfilled.

The control circuitry 120 determines the first storage segment 221 to store address data (index 3) of the new data element since it is the storage segment where the comparison has been fulfilled. The control circuitry 120 then controls the storage circuitry 220 to shift address data stored at the determined first storage segment 221 to another storage segment, to storage segment 222. The control circuitry 120 controls the storage circuitry 220 to shift all address data stored in storage segments subsequent to the determined first storage segment 221 by one storage segment. Thus, the index 2 previously stored at the second storage segment 222 is shifted to storage segment 223. Then, the control circuitry 120 controls the storage circuitry to store the address data of the new data element at the determined first storage segment 221.

The control circuitry 120 determines the third storage segment 223 to store address data (index 4) of the new data element since it is the storage segment where the comparison has been fulfilled. The control circuitry 120 then controls the storage circuitry 220 to shift address data stored at the determined first storage segment 221 to another (the next or subsequent) storage segment, to storage segment 224. Then, the control circuitry 120 controls the storage circuitry 220 to store the address data of the new data element at the determined third storage segment 223.

Referring back to Fig. 1, the apparatus 100 may additionally provide an improved change between windows or subsets of the radar data. For instance, the sorting algorithm may be performed repeatedly for a sliding window of the radar data. It is to be noted that the window does not necessarily comprise consecutive data points of the radar data. For instance, the window may comprise two separated arrays of consecutive data elements.

The window may be shifted along the radar data by a predefined number of data elements when the sorting algorithm is completed for the currently selected data elements. The control circuitry 120 may, for example, be further configured to perform the sorting algorithm for a first window of data elements of the radar data. After the sorting algorithm for the first window is performed (completed, i.e., all data elements of the first window are sorted), the control circuitry 120 may select a second window of data elements of the radar data and perform the sorting algorithm for the second window.

The control circuitry 120 may, in some examples, perform the sorting algorithm for the second window through removing only partially the address data stored in the storage circuitry 110 during performance of the sorting algorithm for the first window. That is, instead of resetting the storage circuitry 110 for sorting the next window, a part of the presorted address data is kept. For instance, the first window and the second window may have a part of their data elements in common, e.g., in cases where the sliding of the window from the first position (of the first window) to the second position (of the second window) does not skip all data elements from the first window. The storage circuitry 110 may at least partially keep the address data of the data elements which the first and the second window have in common, whereas address data of data elements which are not in common may be deleted. For example, the control circuitry 120 may trigger a removal of the address data indicating a lowest index, or a removal of the address data which was inserted into the storage circuitry 110 the longest time ago among all address data stored in the storage circuitry 110. By keeping at least part of the address data, the second window is already presorted, and only newly incoming data elements have to be sorted. Thus, the apparatus 100 may reduce computational effort for performing the sorting algorithm.

The control circuitry 120 may further be configured to remove only partially the address data by controlling the storage circuitry 110 to shift address data to be kept in the storage circuitry 110 during performance of the sorting algorithm for the second window to at least one storage segment storing address data to be removed. For instance, the (partial) removal of address data when changing windows may conventionally leave a gap between portions of address data stored in the storage circuity 110. For instance, if the address data at storage segment 112 is removed, then an empty memory space is left between storage segments 111 and 113. By contrast, the apparatus 100 may perform a removal by overwriting the address data to be deleted by address data to be kept.

For example, the control circuitry 120 may control the storage circuitry 110 to pull address data to be kept in a subsequent or previous storage segment into the storage segment to be emptied. Contiguous address data sequences which are to be kept (or all address data subsequent or previous to the address data to be removed) may be jointly shifted by a predefined number of storage segments to overwrite the address data to be removed. The control circuitry 120 may, e.g., rearrange remaining address data to a contiguous data sequence within the storage segments 111 to 113. The apparatus 100 may therefore improve the pre-sorting of the second window.

The partial removal of the address data may further reduce the number of insertion operations. For example, the control circuitry 120 may be further configured to perform the sorting algorithm for the second window through controlling the storage circuitry 110 to exclusively insert address data of data elements of the second window which has not been inserted during performance of the sorting algorithm for the first window. That is, only data elements which the first and the second window do not have in common may have their address data inserted during performance of the sorting algorithm for the second window.

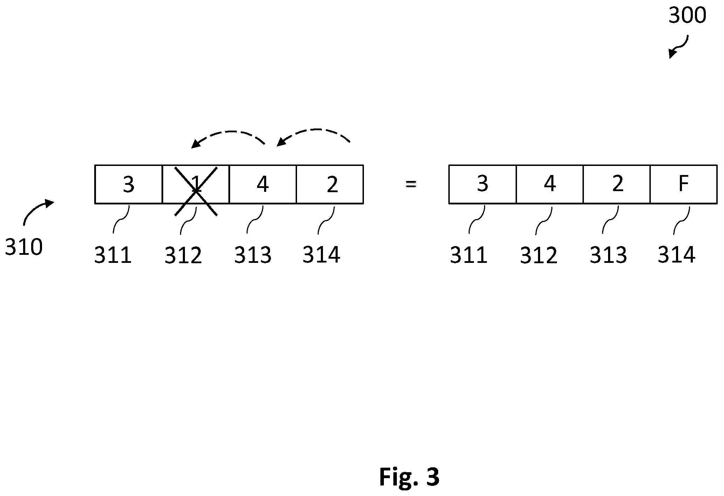

An example of how storage circuitry 310 may be controlled for a change of windows is illustrated by Fig. 3. Fig. 3 shows an example of a data removal 300 during the change of windows. The storage circuitry 310 comprises the storage segments 311, 312, 313 and 314 which are filled with the address data 3, 1, 4 and 2, respectively. During change of windows, the oldest address data, i.e., the address data indicating the lowest index, which is 1 in the example of Fig. 3, is to be deleted. A control circuitry as described herein, such as control circuitry 120, may perform the deletion by shifting address data to be kept in the storage circuitry 310 to the storage segment 312 storing the address data to be deleted. In the example of Fig. 3, the control circuitry 120 may shift each of the indices 4 and 2 by one storage segment to the left. The resulting storage segments 311 to 313 store the address data 3, 4 and 2, respectively, whereas storage segment 314 is empty.

Referring back to Fig. 1, the apparatus 100 may additionally improve the sorting algorithm hardware-wise. The storage circuitry 110 may, in some examples, comprise a parallel shift register coupling the plurality of storage segments in a cascade. The parallel shift register may be digital circuitry comprising groups of respective storage segments operated in parallel, the groups being connected as the cascade. The above-mentioned storage segments may be groups of the parallel shift register. The cascade may define the order of the storage segments. The number of parallel storage segments may, for instance, be selected to be greater than or equal to the length in bits of one portion of address data to be stored at one storage segment. One portion of address data may indicate one data element of the radar data.

The storage segments 111, 112, 113 may be or comprise at least one of flip flops, latches, transmission gates or alike.

The parallel storage segments of one group may be controlled simultaneously such that data may load into the group in parallel, with each bit of the data entering its corresponding storage segment. Likewise, the bits stored in the storage segments of one group may be shifted or transferred in parallel from one group to another when a trigger is applied. A primary operation of such a parallel shift register may be shifting the stored (address) data in a specific direction (left or right) by one or more groups (by a predefined number of storage segments). This operation may be realized by a clock signal synchronizing the shift of the address data among the affected storage segments.

In many sorting algorithms, multiple elements have to be moved towards an end of the buffer. This may require many read/write transactions on conventional memory, e.g., using memory macros. Since the storage circuitry 110 of the apparatus 100 may be implemented as an array of scannable registers (standard (STD) logic), the address data stored therein may be shifted more easily. Thus, the usage of a parallel shift register may simplify the shift operations. Further, the shift register may reduce the space needed for implementing the storage circuitry 110. The sorting buffer may thus be kept small while still maintaining the full sorting capability.

In a specific implementation of the parallel shift register 110, a nm (nanometer) size integration of scannable storage segments with asynchronous reset may be realized. One storage segment may require 8,7 GE (gate equivalents) NAND-2 gates (NAND gates with two input nodes) of cell area. Assuming a radar sensor with three receiving channels, a length of one portion of address data of 4 bits and a window length of 16 data elements, the shift register 110 may occupy roughly 3 x 4 x 16 x 8,7 GE = 1,67 kGE (kilo gate equivalents) of cell area.

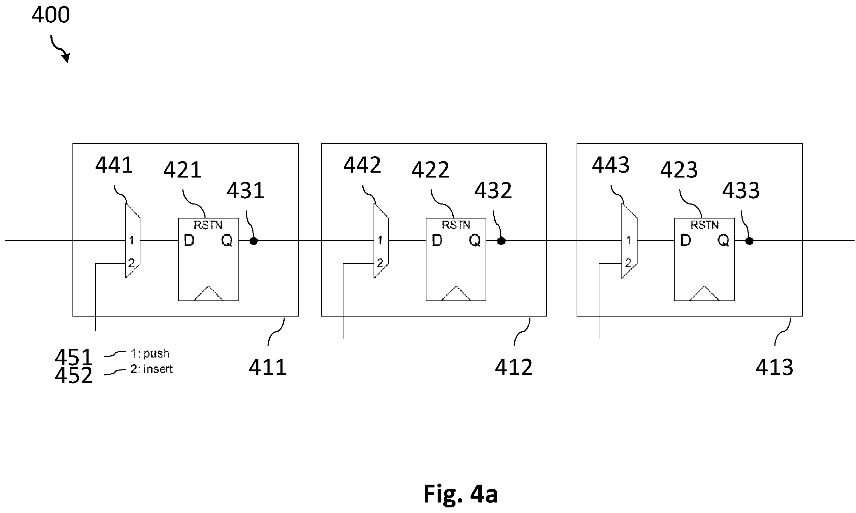

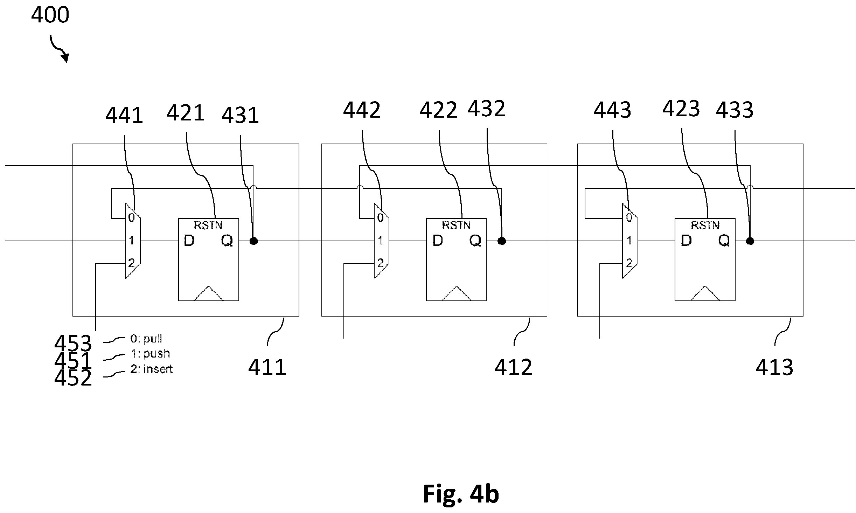

Two examples of a parallel shift register 400 are illustrated by **Fig. 4a** and **Fig. 4b****.** The shift register 400 comprises a plurality of groups (storage segments) 421, 422, 423 coupled in a cascade. Each group comprises at least two flip flops operated in parallel. In the example of Figs. 4a and 4b, three groups 421, 422, 423 are shown. However, the shift register 400 may, in other examples, comprise any number k ≥ 2 of groups.

The groups 421, 422, 423 are coupled to respective output nodes 431, 432, 433, each connecting an output of one group with an input node of a subsequent group, thereby forming the cascade. Thus, the groups 421, 422, 423 are connected in a series or in a sequential manner.

The shift register 400 comprises a plurality of multiplexers (MUX) 441, 442, 443, each connected to an input of a respective one of the groups 421, 422, 423. Thus, each group may be coupled to a respective multiplexer of the plurality of multiplexers 441, 442, 443. Each of the multiplexers 441, 442, 443 may be a digital electronic device or circuitry for selecting and routing multiple input signals onto a single output line connected to a respective group of the plurality of groups 421, 422, 423 based on control signals generated by control circuitry as described herein, such as control circuitry 120. Thus, the function of the multiplexers 441, 442, 443 may be to choose an input signal from a plurality of input nodes and pass the chosen input signal through as the output. The selection may be determined by the control signals provided to the multiplexer. The control signals may be provided, e.g., via a control line (not shown). The control signals may, for example, be in the form of binary-encoded signals, with each unique combination representing a specific input selection.

The shift register 400 comprises two input nodes for each of the multiplexers 441, 442, 443 : first input nodes 451 and second input nodes 452. The first input nodes 451 are coupled to respective output nodes 431, 432, 433 of previous groups (or flip flops) in the cascade. The second input nodes 452 are coupled to a data input carrying the address data. Thus, the control circuitry 120 may control one or more of the multiplexers 441, 442, 443 to select the respective first input node 451 for shifting (pushing) address data from one group to the next. Further, the control circuitry 120 may control one or more of the multiplexers 441, 442, 443 to select the respective second input node 452 for inserting address data, e.g., of a new data element.

In Fig. 4b, the shift register 400 further comprises third input nodes 453 for each of the multiplexers 441, 442 443. The third input nodes 453 are coupled to respective output nodes 431, 432, 433 of the subsequent groups (or flip flops) in the cascade. Thus, the control circuitry 120 may control one or more of the multiplexers 441, 442, 443 to select the respective third input node 453 for shifting address data from one group back to the previous group. Together with the first input nodes, the shift register 400 may thus be capable of shifting address data in both directions, to previous or subsequent flip flops in the cascade. This may further help exploiting the fact of a moving window: the shift register 400 may have the third input nodes 453 to extend the functionality of the shift register 400 with a "pull" option which simplifies a removal of address data when changing the window, as explained above. This may enable subsequent sorting to reuse presorted address data of preceding windows.

In other examples, the configuration of the shift register 400 may be different than those shown in Figs. 4a and 4b. For example, the first input nodes 451 may be coupled to respective output nodes 431, 432, 433 of subsequent groups in the cascade or to respective output nodes 431, 432, 433 of any other groups, e.g., groups being more than one group to the left (previous) or to the right (subsequent) in the cascade. The shift register 400 may, in other examples, have more than two input nodes for further functionalities. The shift register 400 may further comprise asynchronous and/or synchronous input nodes. Further, the shift register 400 is not limited to a D-Q logic as illustrated in Figs. 4a and 4b: In other examples, the shift register 400 may have a negated input or output, or have any additional logic circuit. Further, the shift register 400 may alternatively be implemented with a different storage technology than flip flops, such as with latches or alike.

Referring back to Fig. 1, the apparatus 100 may further perform the OS-CFAR detection itself, whereas, alternatively, the OS-CFAR detection may be performed by external processing circuitry. In some examples, the control circuitry 120 is further configured to, after performance of the sorting algorithm, select a data element indicated by address data stored at a predefined storage segment of the plurality of storage segments. The predefined storage segment may be defined to implement a certain statistical analysis of the OS-CFAR detection. Since the sorted address data indicates a ranking, e.g., by magnitude of the data elements, a predefined kth position in the order of storage segments 111, 112, 113 may correspond to the k highest or smallest magnitude among the data elements. k may be chosen depending on the target application, e.g., to balance sensitivity to weak targets and to increase robustness against clutter and noise.

Assuming the data elements represent a signal environment of a data element under test, e.g., a left side and right side array of the data element under test, the OS-CFAR detection may be performed through determining whether the data element under test sufficiently stands out or differentiates against its signal environment, thus, by applying adaptive thresholding. For example, the control circuitry 120 may be configured to compare the selected data element to the data element under test and determine presence of a target and/or a motion of a target based on the comparison.

An optional intermediate processing may be that the control circuitry 120 is further configured to apply a predefined gain to the selected data element and compare the selected data element with the applied gain to the data element under test. That is, the data element under test may be required to differentiate against the selected data element by a certain level defined by the gain.

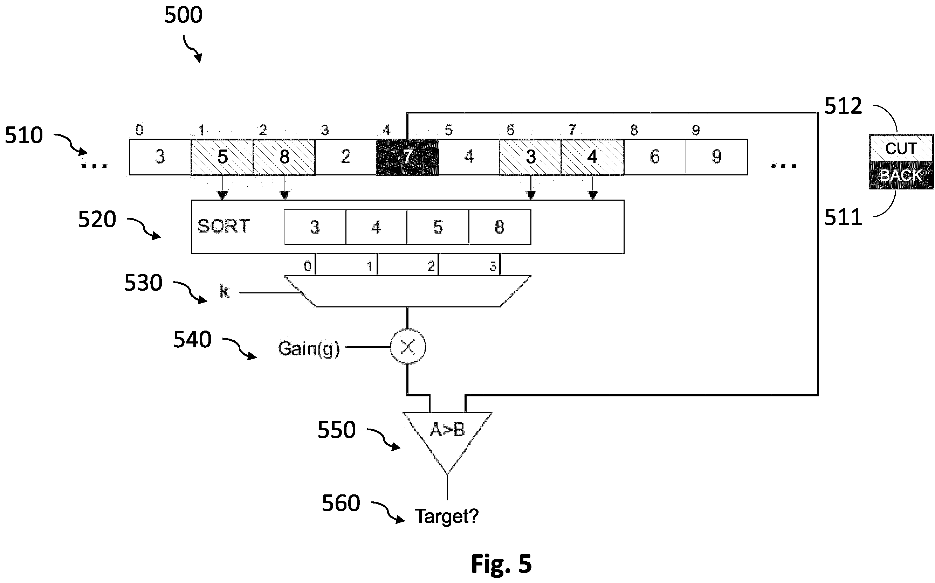

An example of a processing flow of an OS-CFAR detection 500 is illustrated by Fig. 5. The OS-CFAR detection 500 may be performed by an apparatus as described herein, such as apparatus 100. The OS-CFAR detection 500 comprises selecting 510, by control circuitry, a window of radar data. The window comprises a plurality of data elements 511 (background signal) previous and next to a data element 512 under test (cell under test, CUT). The OS-CFAR detection 500 further comprises performing 520, by the control circuitry, a sorting algorithm for the selected window. The sorting algorithm may be performed through buffering address data of the data elements 511 in storage circuitry and sorting the address data, as explained above with reference to Fig. 1.

The OS-CFAR detection 500 further comprises, after performance of the sorting algorithm, selecting 530, by a selector k, a data element indicated by address data stored at a predefined storage segment of the storage circuitry and applying 540, by a multiplier, a predefined gain to the selected data element. The OS-CFAR detection 500 further comprises comparing 550, by a comparator, the selected data element with the applied gain to the data element 512 under test and determining 560 presence of a target and/or a motion of a target based on the comparison. For instance, N (e.g., 4) values may be ranked in the order of magnitude by the sorting algorithm. The smallest magnitude may appear at an output tab 0 and the largest at an output tab N-1. The selector k may choose one of these outputs which is then scaled by a configurable gain (g). Then, the scaled output may be compared against the cell under test, and the comparator may create a binary decision of a target detected or not.

Referring back to Fig. 1, the apparatus 100 may enable a further increase of the efficiency of an external processing circuitry for processing the radar data. The further processing may include elaborate radar data analysis such as determination of at least one of a range, angle, velocity of a target. For example, the control circuitry 120 may be configured to, in response to determining presence of the target and/or a motion of the target, send an interrupt to the processing circuitry for triggering further processing of the radar data. By limiting the further processing to the relevant radar data which indicates a target, the processing circuitry, e.g., a main processor, may be offloaded. The apparatus 100 may thus increase the computational and resource efficiency of the further processing of the radar data.

In summary, the apparatus 100 may provide an (e.g., embedded) indexed sort, optionally, with hardware acceleration using a shift register. The indexed sort may be based on an element-by-element comparison and an insertion of new address data in the determined place (storage segment). When a new data element is to be sorted, each data element indicated by address data stored in the storage circuitry 110 may be read, e.g., in an ascending order until the new data element matches the sort (comparison) criterion. Instead of keeping the values of the data elements in the sorting list, the addresses (pointers) of the values are kept. The address width may be reduced to a minimum, which may be defined by the maximum window length of CFAR (e.g., 4 bits for 16 sample window width). Therefore, the apparatus 100 may save memory area needed for a sorting algorithm.

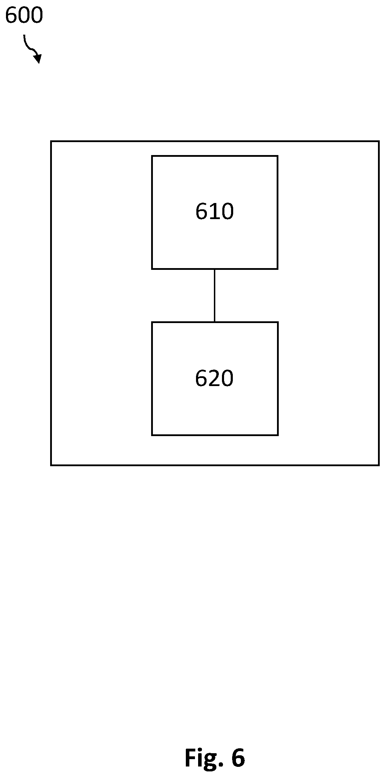

Fig. 6 illustrates an example of a radar system 600. The radar system 600 comprises an apparatus 610 as described herein, such as apparatus 100, and a radar sensor 620 configured to generate the radar data. The radar sensor 620 may, for instance, be an FMCW (Frequency-Modulated Continuous Wave) radar sensor.

Although the apparatus 610 and the radar sensor 620 are depicted as separate blocks in Fig. 6, in other examples, the apparatus 610 may in part or in entirety be included in the radar sensor 620, which thus correspondingly includes all or part of the control circuitry and storage circuitry of the apparatus 610. Thus, the radar sensor 620 may comprise the apparatus 610.

In case the apparatus 610 is only partially included in the radar sensor 620, the radar system 600 may perform distributed processing carrying out respective parts of the processing steps, e.g., in the form of first control (sub-) circuitry included in the radar sensor 620, and second control (sub-) circuitry external to the radar sensor and in communication with the first control circuitry through interface circuitry.

In case the apparatus 610 is integrated in the radar sensor 620, the control circuitry and the radar sensor 620 may be jointly integrated (embedded) in a single semiconductor chip, or in more than one semi-conductor chip.

In case the apparatus 610 is not included in the radar sensor 620, the control circuitry may take the form of circuitry external to the radar sensor 620 and may be communicatively coupled therewith through interface circuitry.

Optionally, the radar system 600 may enable parallel processing in a multi-antenna environment. For example, the radar sensor 620 may comprise a first antenna configured to receive a first signal from a field of view of the radar sensor 620. The radar sensor 620 is configured to generate the radar data based on the first signal. The radar sensor 620 may comprise at least one second antenna configured to receive at least one second signal from the field of view of the radar sensor 620. The radar sensor 620 is configured to generate second radar data based on the second signal. The radar system 600 may comprise at least one second apparatus as described herein, such as apparatus 100, configured to process the second radar data. The radar system 600 may benefit from the indexed sort because saving memory area may be even more relevant for multi-antenna systems with parallel processing.

The radar system 600 may further comprise processing circuitry external to the radar sensor 620. The processing circuitry is configured to, in response to receiving an interrupt from the apparatus 610, perform further processing of the radar data. **In** some examples, the radar system 600 further comprises the further storage circuitry.

More details and aspects of the radar system 600 are explained in connection with the proposed technique or one or more examples described above, e.g., with reference to Fig. 1. The radar system 600 may comprise one or more additional optional features corresponding to one or more aspects of the proposed technique, or one or more examples described above.

The radar system 600 may provide an (e.g., embedded) indexed sort, optionally, with hardware acceleration using a shift register. The apparatus 610 may save memory area in the radar system 600 needed for a sorting algorithm.

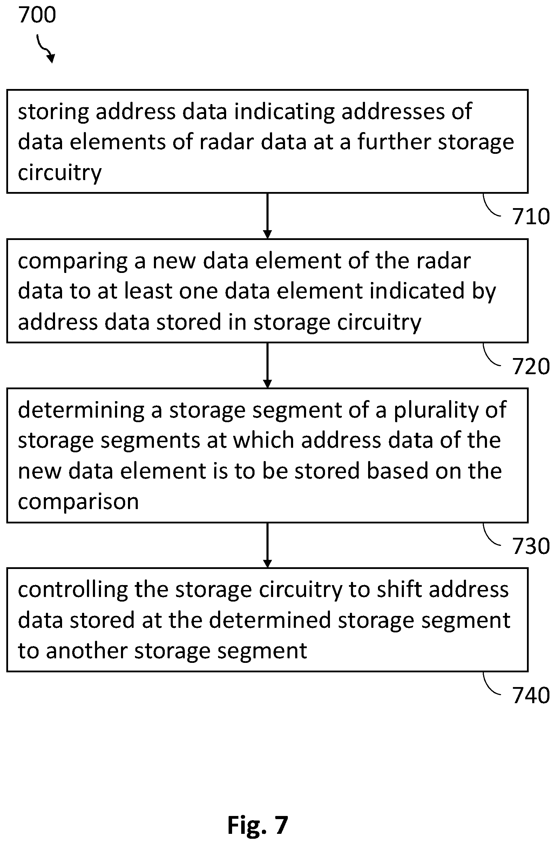

Fig. 7 illustrates an example of a method 700 for OS-CFAR detection. The method 700 may be performed by an apparatus for OS-CFAR detection as described herein, such as apparatus 100. The method 700 comprises storing 710, at storage circuitry comprising a plurality of storage segments, address data indicating addresses of data elements of radar data at a further storage circuitry.

The method 700 further comprises performing, by control circuitry, a sorting algorithm for OS-CFAR detection using the steps of comparing 720 a new data element of the radar data to at least one data element indicated by address data stored in the storage circuitry, determining 730 a storage segment of the plurality of storage segments at which address data of the new data element is to be stored based on the comparison and controlling 740 the storage circuitry to shift address data stored at the determined storage segment to another storage segment. The method 700 may provide an (e.g., embedded) indexed sort, optionally, with hardware acceleration using a shift register. The method 700 may save memory area needed for a sorting algorithm as well as computing resources.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100) for ordered statistics constant false alarm rate, OS-CFAR, detection, comprising:
storage circuitry (110) comprising a plurality of storage segments (111, 112, 113), wherein the storage circuitry (110) is configured to store address data indicating addresses of data elements of radar data at a further storage circuitry (130); and
control circuitry (120) configured to perform a sorting algorithm for OS-CFAR detection using the steps of:
comparing a new data element of the radar data to at least one data element indicated by address data stored in the storage circuitry (110);
determining a storage segment of the plurality of storage segments at which address data of the new data element is to be stored based on the comparison; and
controlling the storage circuitry (110) to shift address data stored at the determined storage segment to another storage segment.

2. The apparatus (100) of claim 1, wherein the control circuitry (120) is further configured to control the storage circuitry (110) to store the address data of the new data element at the determined storage segment.

3. The apparatus (100) of any one of the previous claims, wherein the control circuitry (120) is further configured to control the storage circuitry (110) to shift all address data stored in storage segments subsequent or previous to the determined storage segment by a predefined number of storage segments.

4. The apparatus (100) of any one of the previous claims, wherein the control circuitry (120) is configured to perform an insertion sort for OS-CFAR detection.

5. The apparatus (100) of any one of the previous claims, wherein the storage circuitry (110) comprises a parallel shift register coupling the plurality of storage segments in a cascade.

6. The apparatus (100) of claim 5, wherein the plurality of storage segments are coupled to respective multiplexers, wherein the multiplexers comprise:
input nodes coupled to respective output nodes of previous or subsequent storage segments in the cascade; and
input nodes coupled to a data input.

7. The apparatus (100) of claim 6, wherein the multiplexers further comprise input nodes coupled to respective output nodes of the other one of the previous or subsequent storage segments in the cascade.

8. The apparatus (100) of any one of the previous claims, wherein the control circuitry (120) is further configured to:
perform the sorting algorithm for a first window of data elements of the radar data;
after the sorting algorithm for the first window is performed, select a second window of data elements of the radar data; and
perform the sorting algorithm for the second window through removing only partially the address data stored in the storage circuitry (110) during performance of the sorting algorithm for the first window.

9. The apparatus (100) of claim 8, wherein the control circuitry (120) is further configured to perform the sorting algorithm for the second window through controlling the storage circuitry (110) to exclusively insert address data of data elements of the second window which has not been inserted during performance of the sorting algorithm for the first window.

10. The apparatus (100) of any one of the previous claims, wherein the control circuitry (120) is further configured to, after performance of the sorting algorithm:
select a data element indicated by address data stored at a predefined storage segment of the plurality of storage segments;
compare the selected data element to a data element under test; and
determine presence of a target and/or a motion of a target based on the comparison.

11. The apparatus (100) of claim 10, wherein the control circuitry (120) is configured to, in response to determining presence of a target and/or a motion, send an interrupt to a processing circuitry for triggering further processing of the radar data.

12. A radar system (600), comprising:
an apparatus (610) according to any one of the previous claims; and
a radar sensor (620) configured to generate the radar data.

13. The radar system (600) of claim 12, wherein the radar sensor (620) comprises a first antenna configured to receive a first signal from a field of view of the radar sensor (620), wherein the radar sensor (620) is configured to generate the radar data based on the first signal, wherein the radar sensor (620) comprises at least one second antenna configured to receive at least one second signal from the field of view of the radar sensor (620), wherein the radar sensor (620) is configured to generate second radar data based on the second signal, and wherein the radar system comprises at least one second apparatus according to any one of claims 1 to 11 configured to process the second radar data.

14. The radar system (600) of any one of claims 12 or 13, further comprising processing circuitry external to the radar sensor (620), wherein the processing circuitry is configured to, in response to receiving an interrupt from the apparatus (610), perform further processing of the radar data.

15. A method (700) for ordered statistics constant false alarm rate, OS-CFAR, detection, comprising:
storing (710), at storage circuitry comprising a plurality of storage segments, address data indicating addresses of data elements of radar data at a further storage circuitry; and
performing, by control circuitry, a sorting algorithm for OS-CFAR detection using the steps of:
comparing (720) a new data element of the radar data to at least one data element indicated by address data stored in the storage circuitry;
determining (730) a storage segment of the plurality of storage segments at which address data of the new data element is to be stored based on the comparison; and
controlling (740) the storage circuitry to shift address data stored at the determined storage segment to another storage segment.

## Patentansprüche

1. Vorrichtung (100) zur Detektion einer konstanten Falschalarmrate durch geordnete Statistik, OS-CFAR, umfassend:
eine Speicherschaltungsanordnung (110), die eine Mehrzahl von Speichersegmenten (111, 112, 113) umfasst, wobei die Speicherschaltungsanordnung (110) dazu ausgelegt ist, Adressdaten, die Adressen von Datenelementen von Radardaten angeben, in einer weiteren Speicherschaltungsanordnung (130) zu speichern; und
eine Steuerschaltungsanordnung (120), die dazu ausgelegt ist, einen Sortieralgorithmus zur OS-CFAR-Detektion unter Verwendung der folgenden Schritte auszuführen:
Vergleichen eines neuen Datenelements der Radardaten mit mindestens einem Datenelement, das durch Adressdaten angegeben wird, die in der Speicherschaltungsanordnung (110) gespeichert sind;
Bestimmen eines Speichersegments der Mehrzahl von Speichersegmenten, in dem Adressdaten des neuen Datenelements gespeichert werden sollen, basierend auf dem Vergleich; und
Steuern der Speicherschaltungsanordnung (110), um Adressdaten, die in dem bestimmten Speichersegment gespeichert sind, zu einem anderen Speichersegment zu verschieben.

2. Vorrichtung (100) nach Anspruch 1, wobei die Steuerschaltungsanordnung (120) ferner dazu ausgelegt ist, die Speicherschaltungsanordnung (110) so zu steuern, dass sie die Adressdaten des neuen Datenelements in dem bestimmten Speichersegment speichert.

3. Vorrichtung (100) nach einem der vorhergehenden Ansprüche, wobei die Steuerschaltungsanordnung (120) ferner dazu ausgelegt ist, die Speicherschaltungsanordnung (110) so zu steuern, dass sie alle Adressdaten, die in Speichersegmenten nach oder vor dem bestimmten Speichersegment gespeichert sind, um eine vordefinierte Anzahl von Speichersegmenten verschiebt.

4. Vorrichtung (100) nach einem der vorhergehenden Ansprüche, wobei die Steuerschaltungsanordnung (120) dazu ausgelegt ist, eine Einfügungssortierung zur OS-CFAR-Detektion durchzuführen.

5. Vorrichtung (100) nach einem der vorhergehenden Ansprüche, wobei die Speicherschaltungsanordnung (110) ein Parallelschieberegister umfasst, das die Mehrzahl von Speichersegmenten in einer Kaskade koppelt.

6. Vorrichtung (100) nach Anspruch 5, wobei die Mehrzahl von Speichersegmenten mit jeweiligen Multiplexern gekoppelt ist, wobei die Multiplexer Folgendes umfassen:
Eingangsknoten, die mit jeweiligen Ausgangsknoten vorheriger oder nachfolgender Speichersegmente in der Kaskade gekoppelt sind; und
Eingangsknoten, die mit einem Dateneingang gekoppelt sind.

7. Vorrichtung (100) nach Anspruch 6, wobei die Multiplexer ferner Eingangsknoten umfassen, die mit jeweiligen Ausgangsknoten des anderen der vorherigen oder nachfolgenden Speichersegmente in der Kaskade gekoppelt sind.

8. Vorrichtung (100) nach einem der vorhergehenden Ansprüche, wobei die Steuerschaltungsanordnung (120) zu Folgendem ausgelegt ist:
Ausführen des Sortieralgorithmus für ein erstes Fenster von Datenelementen der Radardaten;
nach dem Ausführen des Sortieralgorithmus für das erste Fenster Auswählen eines zweiten Fensters von Datenelementen der Radardaten; und
Ausführen des Sortieralgorithmus für das zweite Fenster durch nur teilweises Entfernen der in der Speicherschaltungsanordnung (110) gespeicherten Adressdaten während der Ausführung des Sortieralgorithmus für das erste Fenster.

9. Vorrichtung (100) nach Anspruch 8, wobei die Steuerschaltungsanordnung (120) ferner dazu ausgelegt ist, den Sortieralgorithmus für das zweite Fenster durch derartiges Steuern der Speicherschaltungsanordnung (110) auszuführen, dass ausschließlich Adressdaten von Datenelementen des zweiten Fensters eingefügt werden, die während der Ausführung des Sortieralgorithmus für das erste Fenster nicht eingefügt wurden.

10. Vorrichtung (100) nach einem der vorhergehenden Ansprüche, wobei die Steuerschaltungsanordnung (120) nach der Ausführung des Sortieralgorithmus ferner zu Folgendem ausgelegt ist:
Auswählen eines Datenelements, das durch Adressdaten angegeben wird, die in einem vordefinierten Speichersegment der Mehrzahl von Speichersegmenten gespeichert sind;
Vergleichen des ausgewählten Datenelements mit einem zu testenden Datenelement; und
Bestimmen des Vorhandenseins eines Ziels und/oder einer Bewegung eines Ziels basierend auf dem Vergleich.

11. Vorrichtung (100) nach Anspruch 10, wobei die Steuerschaltungsanordnung (120) dazu ausgelegt ist, in Reaktion auf das Bestimmen des Vorhandenseins eines Ziels und/oder einer Bewegung einen Interrupt an eine Verarbeitungsschaltungsanordnung zu senden, um Weiterverarbeitung der Radardaten auszulösen.

12. Radarsystem (600), umfassend:
eine Vorrichtung (610) nach einem der vorhergehenden Ansprüche; und
einen Radarsensor (620), der dazu ausgelegt ist, die Radardaten zu erzeugen.

13. Radarsystem (600) nach Anspruch 12, wobei der Radarsensor (620) eine erste Antenne umfasst, die dazu ausgelegt ist, ein erstes Signal von einem Sichtfeld des Radarsensors (620) zu empfangen, wobei der Radarsensor (620) dazu ausgelegt ist, die Radardaten basierend auf dem ersten Signal zu erzeugen, wobei der Radarsensor (620) mindestens eine zweite Antenne umfasst, die dazu ausgelegt ist, mindestens ein zweites Signal von dem Sichtfeld des Radarsensors (620) zu empfangen, wobei der Radarsensor (620) dazu ausgelegt ist, zweite Radardaten basierend auf dem zweiten Signal zu erzeugen, und wobei das Radarsystem mindestens eine zweite Vorrichtung nach einem der Ansprüche 1 bis 11 umfasst, die dazu ausgelegt ist, die zweiten Radardaten zu verarbeiten.

14. Radarsystem (600) nach einem der Ansprüche 12 oder 13, ferner umfassend eine Verarbeitungsschaltungsanordnung außerhalb des Radarsensors (620), wobei die Verarbeitungsschaltungsanordnung dazu ausgelegt ist, in Reaktion auf das Empfangen eines Interrupts von der Vorrichtung (610) Weiterverarbeitung der Radardaten durchzuführen.

15. Verfahren (700) zur Detektion einer konstanten Falschalarmrate durch geordnete Statistik, OS-CFAR, umfassend:
in einer Speicherschaltungsanordnung, die eine Mehrzahl von Speichersegmenten umfasst, Speichern (710) von Adressdaten, die Adressen von Datenelementen von Radardaten in einer weiteren Speicherschaltungsanordnung angeben; und
Ausführen eines Sortieralgorithmus zur OS-CFAR-Detektion durch eine Steuerschaltungsanordnung unter Verwendung der folgenden Schritte:
Vergleichen (720) eines neuen Datenelements der Radardaten mit mindestens einem Datenelement, das durch Adressdaten angegeben wird, die in der Speicherschaltungsanordnung gespeichert sind;
Bestimmen (730) eines Speichersegments der Mehrzahl von Speichersegmenten, in dem Adressdaten des neuen Datenelements gespeichert werden sollen, basierend auf dem Vergleich; und
Steuern (740) der Speicherschaltungsanordnung so, dass sie Adressdaten, die in dem bestimmten Speichersegment gespeichert sind, zu einem anderen Speichersegment verschiebt.

## Revendications

1. Appareil (100) de détection de taux de fausse alarme constant de statistiques ordonnées, OS-CFAR, comprenant :
des circuits de stockage (110) comprenant une pluralité de segments de stockage (111, 112, 113), les circuits de stockage (110) étant conçus pour stocker des données d'adresse indiquant des adresses d'éléments de données de données radar au niveau de circuits de stockage supplémentaires (130) ; et
des circuits de commande (120) conçus pour exécuter un algorithme de tri pour la détection OS-CFAR en utilisant les étapes suivantes :
la comparaison d'un nouvel élément de données des données radar à au moins un élément de données indiqué par des données d'adresse stockées dans les circuits de stockage (110) ;
la détermination d'un segment de stockage de la pluralité de segments de stockage au niveau duquel les données d'adresse du nouvel élément de données doivent être stockées sur la base de la comparaison ; et
la commande des circuits de stockage (110) pour décaler les données d'adresse stockées au niveau du segment de stockage déterminé vers un autre segment de stockage.

2. Appareil (100) selon la revendication 1, dans lequel les circuits de commande (120) sont en outre conçus pour commander aux circuits de stockage (110) de stocker les données d'adresse du nouvel élément de données au niveau du segment de stockage déterminé.

3. Appareil (100) selon l'une quelconque des revendications précédentes, dans lequel les circuits de commande (120) sont en outre conçus pour commander aux circuits de stockage (110) de décaler d'un nombre prédéfini de segments de stockage toutes les données d'adresse stockées dans des segments de stockage postérieurs ou antérieurs au segment de stockage déterminé.

4. Appareil (100) selon l'une quelconque des revendications précédentes, dans lequel les circuits de commande (120) sont conçus pour effectuer un tri d'insertion pour la détection OS-CFAR.

5. Appareil (100) selon l'une quelconque des revendications précédentes, dans lequel les circuits de stockage (110) comprennent un registre à décalage parallèle couplant la pluralité de segments de stockage en cascade.

6. Appareil (100) selon la revendication 5, dans lequel la pluralité de segments de stockage sont couplés à des multiplexeurs respectifs, les multiplexeurs comprenant :
des nœuds d'entrée couplés à des nœuds de sortie respectifs de segments de stockage antérieurs ou postérieurs dans la cascade ; et
des nœuds d'entrée couplés à une entrée de données.

7. Appareil (100) selon la revendication 6, dans lequel les multiplexeurs comprennent en outre des nœuds d'entrée couplés à des nœuds de sortie respectifs de l'autre des segments de stockage antérieurs ou postérieurs dans la cascade.

8. Appareil (100) selon l'une quelconque des revendications précédentes, dans lequel les circuits de commande (120) sont conçus en outre pour :
exécuter l'algorithme de tri pour une première fenêtre d'éléments de données des données radar ;
après avoir exécuté l'algorithme de tri pour la première fenêtre, sélectionner une seconde fenêtre d'éléments de données des données radar ; et
exécuter l'algorithme de tri pour la seconde fenêtre en supprimant seulement partiellement les données d'adresse stockées dans les circuits de stockage (110) pendant la mise en œuvre de l'algorithme de tri pour la première fenêtre.

9. Appareil (100) selon la revendication 8, dans lequel les circuits de commande (120) sont en outre conçus pour exécuter l'algorithme de tri pour la seconde fenêtre en commandant aux circuits de stockage (110) d'insérer exclusivement des données d'adresse d'éléments de données de la seconde fenêtre qui n'ont pas été insérés pendant la mise en œuvre de l'algorithme de tri pour la première fenêtre.

10. Appareil (100) selon l'une quelconque des revendications précédentes, dans lequel les circuits de commande (120) sont en outre conçus pour, après la mise en œuvre de l'algorithme de tri :
sélectionner un élément de donnée indiqué par des données d'adresse stockées au niveau d'un segment de stockage prédéfini de la pluralité de segments de stockage ;
comparer l'élément de données sélectionné à un élément de données testé ; et
déterminer la présence d'une cible et/ou d'un mouvement d'une cible sur la base de la comparaison.

11. Appareil (100) selon la revendication 10, dans lequel les circuits de commande (120) sont conçus pour, en réponse à la détermination de la présence d'une cible et/ou d'un mouvement, envoyer une interruption à des circuits de traitement pour déclencher un traitement supplémentaire des données radar.

12. Système radar (600), comprenant :
un appareil (610) selon l'une quelconque des revendications précédentes ; et
un capteur radar (620) conçu pour générer les données radar.

13. Système radar (600) selon la revendication 12, dans lequel le capteur radar (620) comprend une première antenne conçue pour recevoir un premier signal d'un champ de vision du capteur radar (620), le capteur radar (620) étant conçu pour générer les données radar sur la base du premier signal, le capteur radar (620) comprenant au moins une seconde antenne conçue pour recevoir au moins un second signal du champ de vision du capteur radar (620), le capteur radar (620) étant conçu pour générer des secondes données radar sur la base du second signal, et le système radar comprenant au moins un second appareil selon l'une quelconque des revendications 1 à 11, conçu pour traiter les secondes données radar.

14. Système radar (600) selon l'une quelconque des revendications 12 ou 13, comprenant en outre des circuits de traitement externes au capteur radar (620), les circuits de traitement étant conçus pour, en réponse à la réception d'une interruption de l'appareil (610), effectuer un traitement supplémentaire des données radar.

15. Procédé (700) de détection de taux de fausse alarme constant de statistiques ordonnées, OS-CFAR, comprenant :
le stockage (710), au niveau de circuits de stockage comprenant une pluralité de segments de stockage, de données d'adresse indiquant des adresses d'éléments de données de données radar au niveau de circuits de stockage supplémentaires ; et
l'exécution, par des circuits de commande, d'un algorithme de tri pour la détection OS-CFAR à l'aide des étapes suivantes :
la comparaison (720) d'un nouvel élément de données des données radar à au moins un élément de données indiqué par des données d'adresse stockées dans les circuits de stockage ;
la détermination (730) d'un segment de stockage de la pluralité de segments de stockage au niveau duquel les données d'adresse du nouvel élément de données doivent être stockées sur la base de la comparaison ; et
la commande (740) des circuits de stockage pour décaler les données d'adresse stockées au niveau du segment de stockage déterminé vers un autre segment de stockage.
